**Europäisches Patentamt**

**European Patent Office**

**Office européen des brevets**

(19)

(11) Veröffentlichungsnummer: **0 001 404**
**B1**

(12) # EUROPÄISCHE PATENTSCHRIFT

(45) Veröffentlichungstag der Patentschrift:
**07.01.81**

(51) Int. Cl.³: **C 04 B 7/44,** F 27 D 13/00

(21) Anmeldenummer: **78100881.8**

(22) Anmeldetag: **13.09.78**

(54) **Vorrichtung zur Wärmebehandlung von feinkörnigen Feststoffen.**

(30) Priorität: **19.09.77  DE 2742099**

(43) Veröffentlichungstag der Anmeldung:
**18.04.79 Patentblatt 79/8**

(45) Bekanntmachung des Hinweises auf die Patenterteilung:
**07.01.81 Patentblatt 81/1**

(84) Benannte Vertragsstaaten:
**CH DE FR GB SE**

(56) Entgegenhaltungen:
**DE-A-1 433 842**
**DE-B-1 209 040**
**DE-B-2 052 653**
**DE-B-2 255 068**
**US-A-3 653 645**

(73) Patentinhaber: **Krupp Polysius Aktiengesellschaft,
Graf-Galen-Strasse 17, D-4720 Beckum (DE)**

(72) Erfinder: **Krützner, Karl, jr., Rostocker Strasse 8,
D-4720 Beckum (DE)**

(74) Vertreter: **Tetzner, Volkmar, Dr.-Ing. Dr. jur.,
Van-Gogh-Strasse 3, D-8000 München 71 (DE)**

Vorrichtung zur Wärmebehandlung von feinkörnigen Feststoffen

Die Erfindung betrifft eine Vorrichtung zur Wärmebehandlung von feinkörnigen Feststoffen, insbesondere von Zementrohmaterial, mit einem Drehrohrofen, einem von den Abgasen des Drehrohrofens durchströmten mehrstufigen Zyklonvorwärmer sowie mit einer zur Abzweigung eines Teiles der Ofenabgase dienenden By-pass-Leitung, die derart an die Verbindungsleitung zwischen Drehrohrofen und Zyklonvorwärmer angeschlossen ist, dass der abgezweigte Teilstrom um mindestens etwa 90° gegenüber dem zum Zyklonvorwärmer strömenden Ofenabgasstrom umgelenkt wird, und die ferner nahe dieser Anschlusstelle mit einem Frischluftanschluss versehen ist.

Bei der Herstellung von alkaliarmem Zementklinker in Drehrohröfen mit Wanderrost-Vorwärmer ist es bekannt (US-PS 3 653 645), einen Teil des Ofenabgasstromes über eine auf der Decke des Wanderrost-Gehäuses angeordnete Kammer abzuziehen und in dieser Kammer durch einen Frischluftstrom so weit abzukühlen, dass die im Abgas enthaltenen Alkalien auf den mitgeführten Staubteilchen kondensieren. Der Abgasteilstrom wird dann von dieser Mischkammer einem Staubabscheider zugeführt, wo der Staub mit den darauf niedergeschlagenen Schadstoffen abgeschieden wird.

Während bei dieser bekannten Anlage der Wunsch im Vordergrund steht, den Alkaligehalt im Fertigprodukt zu senken, liegt eine etwas andere Problemstellung bei Brennanlagen vor, bei denen feinkörnige Feststoffe vor Eintritt in den Drehrohrofen in einem mehrstufigen Zyklonvorwärmer mit den heissen Ofenabgasen vorgewärmt werden. Die in den Ofenabgasen häufig enthaltenen Schadstoffe (insbesondere Alkalien und Chloride) führen nämlich bei derartigen Vorwärmern häufig zu einer sehr störenden Ansatzbildung insbesondere in der heissesten (untersten) Stufe des Vorwärmers und in der Verbindungsleitung zwischen Drehrohrofen und Zyklonvorwärmer.

Zur Vermeidung derartiger Störungen ist es bekannt, über eine By-pass-Leitung einen Teil der Ofenabgase abzuziehen und diesen Teilstrom durch Beimischung von Frischluft (DE-AS 12 09 040) oder gekühlte Abgase (DE-OS 14 33 842), durch Einspritzen von Wasser (DE-AS 22 55 068) oder durch indirekte Kühlung (DE-AS 20 52 653) so weit abzukühlen, dass die Schadstoffe auf den Staubanteilen des Gasstromes auskondensieren und durch Staubabscheidung entfernt werden können. Die Staubabscheidung erfolgt entweder in einem der Kühlzone räumlich nachgeordneten Staubabscheider (DE-AS 22 55 068, DE-OS 14 33 842, DE-AS 12 09 040) oder in einem den Boden des indirekten Kühlers bildenden Sammelgefäss (DE-AS 20 52 653). Der so gereinigte Teilgasstrom wird dann entweder in den Zyklonvorwärmer zurückgeführt oder unter Umgehung des Zyklonvorwärmers mit dem übrigen Abgasstrom vereinigt.

Beim Betrieb derartiger Anlagen ergeben sich jedoch in der Praxis erhebliche Probleme. Bedingt durch die hohe Temperatur der Ofenabgase unterliegt die Auskleidung des Teilstückes der By-pass-Leitung, das von der Verbindungsleitung zwischen Ofen und Zyklonvorwärmer zum Frischluftanschluss führt, einem erheblichen Verschleiss. Da ferner der diese By-pass-Leitung durchsetzende Teilstrom der Ofenabgase vielfach einen hohen Staubgehalt aufweist und gerade die Schadstoffe (wie Alkalien und Chloride) in einem kritischen Temperaturbereich stark zur Ansatzbildung neigen, treten bei den bekannten Anlagen in dieser By-pass-Leitung oft starke Ansatzbildungen auf, was nicht selten zu Betriebsstörungen führt und häufige Reinigungsarbeiten erforderlich macht.

Der Erfindung liegt daher die Aufgabe zugrunde, unter Vermeidung dieser Nachteile eine Vorrichtung der eingangs genannten Art so auszubilden, dass auch bei einem hohen Gehalt der Ofenabgase an Schadstoffen in der By-pass-Leitung keine störenden Ansatzbildungen und Verschleisserscheinungen auftreten.

Diese Aufgabe wird erfindungsgemäss durch die Kombination folgender Merkmale gelöst:
a) Die By-pass-Leitung ist an die gegenüber der Vertikalen geneigte Verbindungsleitung auf der Innenseite der Gasströmung angeschlossen;
b) auf der Höhe des Frischluftanschlusses ist die By-pass-Leitung als eine im wesentlichen in vertikaler Richtung durchströmte, zur Vermischung von Frischluft mit dem abgezweigten Ofenabgas-Teilstrom dienende Mischkammer ausgebildet;
c) der untere Bereich der Mischkammer ist als Trichter und das mit der Verbindungsleitung verbundene Teilstück der By-pass-Leitung als den Trichter verlängerndes, schurrenförmiges Rohrstück ausgebildet;
d) der Abstand zwischen der Mischkammer – auf der Höhe des Frischluftanschlusses – und der durch den Schwerpunkt der Querschnittsfläche der Verbindungsleitung – im Bereich der Anschlusstelle der By-pass-Leitung – verlaufenden Strömungsachse des zum Zyklonvorwärmer strömenden Ofenabgasstromes beträgt und das 1,5- bis 2,2fache der Quadratwurzel aus F/$\pi$.

Da der vom Drehrohrofen zum Zyklonvorwärmer strömende Abgasstrom durch die Verbindungsleitung umgelenkt wird und auf die im Abgasstrom enthaltenen Staubteilchen in der Umlenkzone eine Zentrifugalkraft wirkt, verteilt sich der Staub nicht gleichmässig über die Querschnittsfläche der Verbindungsleitung; es ergibt sich vielmehr eine gewisse Staubanreicherung auf der Aussenseite und eine Verarmung an Staubteilchen auf der Innenseite der Gasströmung. Gemäss Merkmal a) wird nun der Teilgasstrom von der staubarmen Innenseite der Gasströmung abgezogen. Da der abgezweigte Teilstrom ausserdem um mindestens etwa 90° gegenüber dem zum Zyklonvorwärmer strömenden Ofenabgasstrom umgelenkt wird und bei dieser Umlenkung weitere Staubteilchen aus dem abgezweigten Teilstrom ausfallen, wird die By-pass-Leitung von einem verhältnismässig staubarmen Teilstrom der Ofenabgase durchsetzt. Hierdurch wird die Gefahr störender Ansatzbildungen bereits weitgehend herabgesetzt.

Indem ferner die By-pass-Leitung im Bereich des Frischluftanschlusses als eine im wesentlichen in vertikaler Richtung durchströmte Mischkammer ausgebildet ist (Merkmal b) und diese Mischkammer zugleich einen Abscheideraum bildet, der über einen Trichter und ein gleichfalls schurrenförmiges Rohrstück mit der Verbindungsleitung zwischen Ofen und Zyklonvorwärmer in Verbindung steht, wird gewährleistet, dass die im Bereich der Mischkammer ausfallenden Staubteilchen in die Verbindungsleitung und damit in den Hauptabgasstrom zurückfallen. Dadurch wird die Gefahr einer störenden Ansatzbildung in der By-pass-Leitung durch ausfallende, mit kondensierten Schadstoffen angereicherte Staubteilchen weiter erheblich verringert.

Gemäss Merkmal d) ist schliesslich ein besonders kleiner Abstand zwischen der Mischkammer und der Anschlusstelle der By-pass-Leitung an der Verbindungsleitung vorgesehen. Durch diese Verkürzung des Strömungsweges von der Abzweigstelle bis zum Frischluftanschluss wird einerseits die Gefahr störender Ansatzbildungen in diesem besonders kritischen Bereich entscheidend herabgesetzt, und es wird andererseits hierdurch (sowie durch die Merkmale b) und c)) gewährleistet, dass die in diesem Teilstück der By-pass-Leitung sowie im Bereich der Mischkammer ausfallenden Staubteilchen selbsttätig und zuverlässig in den vom Drehrohrofen zum Zyklonvorwärmer strömenden Hauptabgasstrom zurückfallen. Damit erübrigen sich die bei den bekannten Anlagen erforderlichen gesonderten Staubabscheider bzw. Staubsammler, und es entfallen auch aufwendige Massnahmen, um den im Bereich der By-pass-Leitung abgeschiedenen Staub wieder in den Gutkreislauf zurückzuführen.

Zweckmässige Ausgestaltungen der Erfindung sind Gegenstand der Unteransprüche und werden im Zusammenhang mit der Beschreibung eines in der Zeichnung veranschaulichten Ausführungsbeispieles näher erläutert.

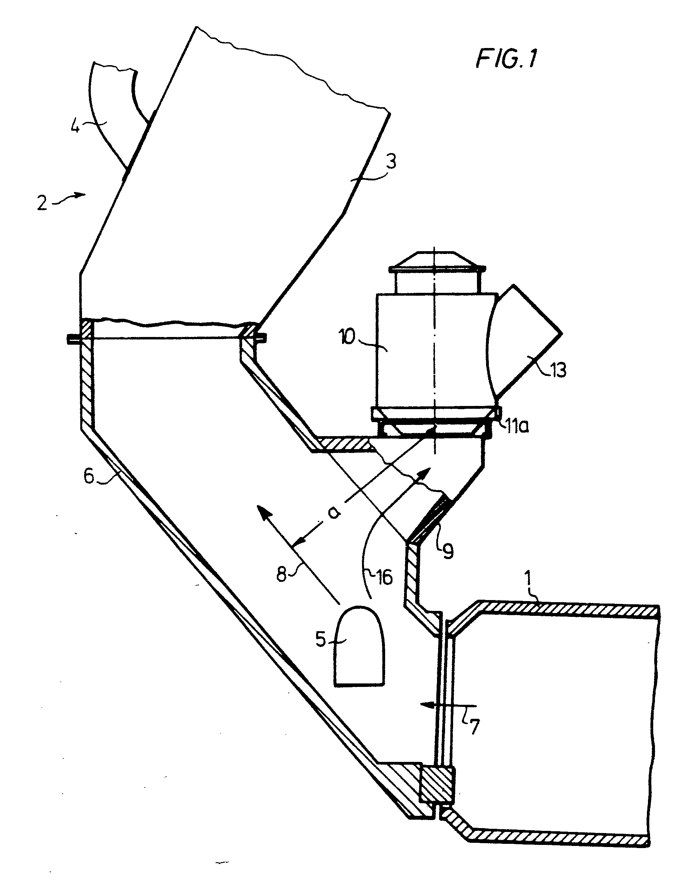

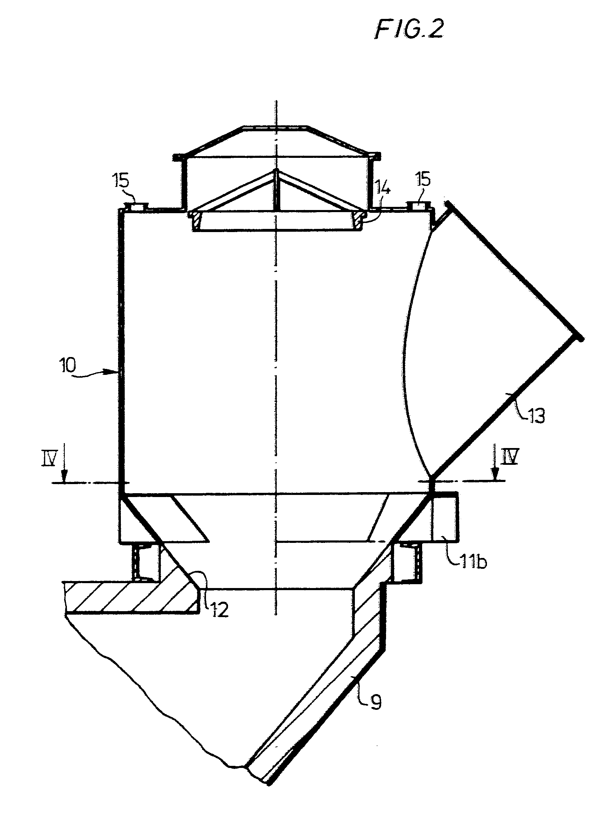

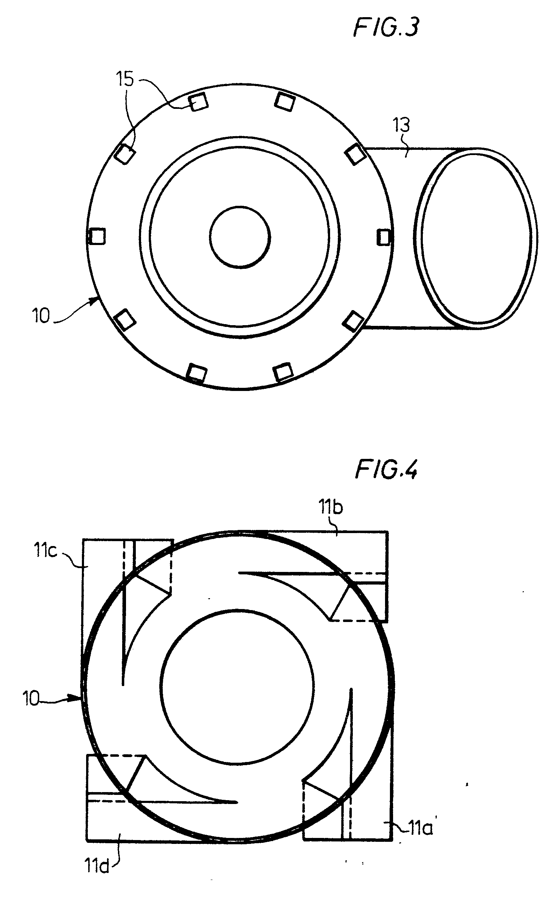

Auf der Innenseite der umgelenkten Strömung (in Fig. 1 also im Bereich der oberen Wand der geneigten Verbindungsleitung 6) ist eine By-pass-Leitung angeschlossen, deren Teilstück 9 die Form eines verhältnismässig kurzen, schurrenartigen Rohrstückes aufweist. Dieses Teilstück 9 der By-pass-Leitung mündet in eine Mischkammer 10, die im unteren Bereich 4 gleichmässig über den Umfang verteilte Düsen 11a bis 11d zur Frischluftzufuhr aufweist. Diese Düsen sind so angeordnet, dass die Frischluft an vier Stellen des Umfangs der Mischkammer 10 etwa tangential in die Kammer eintritt.

Im Bereich der Düsen 11a bis 11d sowie in dem darunter liegenden Bereich 12 ist die Mischkammer als kurzer Trichter ausgebildet, der in das Teilstück 9 der By-pass-Leitung übergeht.

Die Mischkammer 10 ist weiterhin mit einem seitlich schräg nach oben weisenden Anschluss 13 für das die Mischgase aus Ofenabgasen und Frischluft führende (nicht veranschaulichte) Teilstück der By-pass-Leitung versehen. Dieses nicht dargestellte Teilstück der By-pass-Leitung führt die abgekühlten Mischgase beispielsweise zu einem weiteren Kühler oder unmittelbar zu einem Elektrofilter.

Die Mischkammer 10 enthält ferner einen glockenartig ausgebildeten Verschlusskörper 14, der sich innerhalb der Mischkammer 10 vertikal so weit absenken lässt, dass er zur dichtenden Auflage auf dem trichterartigen Bereich 12 kommt. Auf diese Weise lässt sich die By-pass-Leitung im Bedarfsfalle absperren. Öffnungen 15 im Deckel der Mischkammer gestatten im Bedarfsfalle einen Zugang zum Innern der Mischkammer 10.

Wie insbesondere aus Fig. 1 hervorgeht, wird durch die By-pass-Leitung (Teilstück 9) ein Teilstrom der Ofenabgase abgezweigt (Pfeil 16), der durch diese Abzweigung um einen Winkel von etwa 90° gegenüber dem zum Zyklonvorwärmer 2 strömenden Ofenabgasstrom (Pfeil 8) umgelenkt wird. Wenngleich der abgezweigte Teilstrom ohnehin bereits verhältnismässig staubarm ist, da er auf der strömungsinneren Seite der nach Austritt aus dem Drehrohrofen umgelenkten Ofenabgase abgezogen wird, so ergibt sich noch eine weitere Staubverarmung durch die zweite Umlenkung, die der abgezweigte Teilstrom (Pfeil 16) gegenüber dem Hauptabgasstrom (Pfeil 8) erfährt. Dennoch mitgeführte Staubteilchen, die beispielsweise in der Mischkammer 10 durch die intensive Vermischung des Heissgases mit der tangential zugeführten Frischluft ausfallen, werden über den trichterartig ausgebildeten unteren Teil der Kammer 10 und das schurrenartige Teilstück 9 der By-pass-Leitung in die Verbindungsleitung 6 zurückgeführt.

Ist schon auf diese Weise die Bildung störender Staubablagerungen und Anbackungen in dem Teilstück 9 der By-pass-Leitung und in der Mischkammer 10 weitgehend ausgeschlossen, so wird noch eine weitere wesentliche Verbesserung in dieser Hinsicht durch die besonders dichte Anordnung der Mischkammer 10 an der Verbindungsleitung 6 erreicht. Bezeichnet man den Abstand zwischen der Mischkammer 10 (auf der Höhe der Frischluftanschlussdüsen 11a bis 11d) und der durch den Schwerpunkt der Querschnittsfläche F der Verbindungsleitung 6 (im Bereich der Anschlusstelle der By-pass-Leitung, Teilstück 9) verlaufenden Strömungsachse des zum Zyklonvorwärmer strömenden Ofenabgasstromes (Pfeil 8) mit a, so beträgt erfindungsgemäss dieser Abstand a das 1,5- bis 3fache, vorzugsweise das 1,5- bis 2,2fache der Quadratwurzel aus $F/\pi$.

Besitzt beispielsweise die Verbindungsleitung 6 einen Querschnitt von 4×3,5 m, so wird der Abstand a zwischen 3,2 und 6,3 m, vorzugsweise zwischen 3,2 und 4,6 m, gewählt.

## Patentansprüche

1. Vorrichtung zur Wärmebehandlung von feinkörnigen Feststoffen, insbesondere von Zementrohmaterial, mit einem Drehrohrofen, einem von den Abgasen des Drehrohrofens durchströmten mehrstufigen Zyklonvorwärmer sowie mit einer zur Abzweigung eines Teiles der Ofenabgase dienenden By-pass-Leitung, die derart an die Verbindungsleitung zwischen Drehrohrofen und Zyklonvorwärmer angeschlossen ist, dass der abgezweigte Teilstrom um mindestens etwa 90° gegenüber dem zum Zyklonvorwärmer strömenden Ofenabgasstrom umgelenkt wird, und die ferner nahe dieser Anschlusstelle mit einem Frischluftanschluss versehen ist, gekennzeichnet durch die Kombination folgender Merkmale:

a) Die By-pass-Leitung ist an die gegenüber der Vertikalen geneigte Verbindungsleitung (6) auf der Innenseite der Gasströmung angeschlossen;

b) auf der Höhe des Frischluftanschlusses ist die By-pass-Leitung als eine im wesentlichen in vertikaler Richtung durchströmte, zur Vermischung von Frischluft mit dem abgezweigten Ofenabgas-Teilstrom dienende Mischkammer (10) ausgebildet;

c) der untere Breich der Mischkammer (10) ist als Trichter und das mit der Verbindungsleitung (6) verbundene Teilstück (9) der By-pass-Leitung als den Trichter verlängerndes, schurrenförmiges Rohrstück ausgebildet;

d) der Abstand (a) zwischen der Mischkammer (10) – auf der Höhe des Frischluftanschlusses (11a bis 11d) – und der durch den Schwerpunkt der Querschnittsfläche (F) der Verbindungsleitung (6) – im Bereich der Anschlusstelle der By-pass-Leitung (9) – verlaufenden Strömungsachse des zum Zyklonvorwärmer (2) strömenden Ofenabgasstromes (8) beträgt das 1,5- bis 3fache, vorzugsweise das 1,5- bis 2,2fache der Quadratwurzel aus $F/\pi$.

2. Vorrichtung nach Anspruch 1, dadurch gekennzeichnet, dass im unteren Bereich der Mischkammer (10) mehrere gleichmässig über den Umfang verteilte Düsen (11a bis 11d) zur Frischluftzufuhr vorgesehen sind.

3. Vorrichtung nach Anspruch 2, gekennzeichnet durch eine solche Anordnung der Düsen (11a bis 11d), dass die Frischluft an mehreren Stellen des Kammerumfanges etwa tangential in die Kammer (10) eintritt.

4. Vorrichtung nach Anspruch 1, dadurch gekennzeichnet, dass die Mischkammer (10) mit einem seitlich schräg nach oben weisenden Anschluss (13) für das die Mischgase aus Ofenabgasen und Frischluft führende Teilstück der By-pass-Leitung versehen ist.

5. Vorrichtung nach Anspruch 1, dadurch gekennzeichnet, dass die Mischkammer (10) mit einem bis zum Sitz auf dem Trichter (12) vertikal absenkbaren Verschlusskörper (14) versehen ist.

## Revendications

1. Dispositif de traitement thermique de matières solides à granulométrie fine, en particulier de matières premières pour la fabrication du ciment, dispositif comprenant un four tubulaire rotatif, un réchauffeur à cyclone, à plusieurs étages, dans lequel passent les gaz d'échappement du four tubulaire, ainsi qu'une canalisation de dérivation d'une partie des gaz d'échappement du four, cette canalisation étant raccordée à la canalisation de liaison du four tubulaire et du réchauffeur de manière que le courant partiel dérivé soit dévié d'au moins environ 90° par rapport au flux des gaz d'échappement du four se dirigeant sur le réchauffeur à cyclone, ladite canalisation de dérivation comportant par ailleurs une arrivée d'air frais à proximité de ce raccord, dispositif caractérisé par la combinaison des particularités suivantes:

a) la canalisation de dérivation est raccordée sur le côté intérieur de la circulation gazeuse à la canalisation de liaison (6) qui est inclinée sur la verticale;

b) la canalisation de dérivation est conformée au niveau du raccord d'arrivée d'air frais en chambre (10) de mélange de l'air frais et du courant partiel dérivé des gaz d'échappement du four, la circulation dans cette chambre étant essentiellement verticale;

c) la partie inférieure de la chambre de mélange (10) est conformée en trémie et le tronçon (9) de la canalisation de dérivation qui est raccordé à la canalisation de liaison (6) est conformé en tubulure en forme de goulotte qui constitue un prolongement de la trémie;

d) la distance (a) comprise entre la chambre de mélange (10) – au niveau du raccord d'arrivée d'air frais (11a à 11d) – et l'axe du flux (8) des gaz d'échappement du four se dirigeant sur le réchauffeur à cyclone (2), axe passant par le centre de gravité de la section transversale (F) de la canalisation de liaison (6) – au voisinage du raccord de la canalisation de dérivation (9) – est égale à 1,5 à 3 fois, de préférence à 1,5 à 2,2 fois la racine carrée de $F/\pi$.

2. Dispositif selon la revendication 1, caractérisé en ce que la partie inférieure de la chambre de mélange (10) comporte plusieurs ajutages (11a à 11d) d'arrivée d'air frais qui sont répartis régulièrement à sa circonférence.

3. Dispositif selon la revendication 2, caractérisé en ce que lesdits ajutages (11a à 11d) sont disposés de manière que l'air frais entre à peu près tangentiellement dans la chambre (10) en plusieurs emplacements de la circonférence de cette dernière.

4. Dispositif selon la revendication 1, caractérisé en ce que la chambre de mélange (10) comporte latéralement un raccord (13) orienté obliquement vers le haut et débouchant sur le tronçon de la canalisation de dérivation par lequel passe le mélange des gaz d'échappement du four et de l'air frais.

5. Dispositif selon la revendication 1, caractérisé en ce que la chambre de mélange (10) est équipée d'un obturateur (14) qui peut être abaissé verticalement de manière à reposer sur la trémie (12).

## Claims

1. Apparatus for heat treating fine-grain solids, in particular cement raw material, comprising a rotary kiln, a multistage cyclone preheater traversed by the waste gases of the rotary kiln and a bypass conduit serving for branching off a portion of the kiln waste gases, said bypass being connected to the connecting line between the rotary kiln and cyclone preheater in such a manner that the branched-off sub-flow is deflected through at least about 90° with respect to the kiln waste gas flow flowing to the cyclone preheater, and which is further provided near this connection point with a fresh-air connection, characterised by the combination of the follwoing features:

a) The bypass conduit is connected to the connecting line (6) inclined with respect to the vertical on the inside of the gas flow;

b) at the level of the fresh-air connection the bypass conduit is formed as mixing chamber (10) traversed substantially in the vertical direction for mixing fresh air with the branched-off kiln waste gas sub-flow;

c) the lower region of the mixing chamber (10) is formed as hopper and the section (9) of the bypass line connected to the connecting line (6) as chute-shaped tubular section extending the hopper;

d) the spacing (a) between the mixing chamber (10) – at the level of the fresh-air connection (11a to 11d) – and the flow axis of the kiln waste gas flow (8) flowing to the cyclone preheater (2) extending through the centre of gravity of the cross-sectional area (F) of the connecting line (6) – in the region of the connecting point of the bypass line (9) – is 1.5 to three times, preferably 1.5 to 2.2 times the square root of $F/\pi$.

2. Apparatus according to claim 1, characterised in that in the lower region of the mixing chamber (10) a plurality of nozzles (11a to 11d) uniformly distributed over the periphery are provided for the fresh-air supply.

3. Apparatus according to claim 2, characterised by an arrangement of the nozzles (11a to 11d) such that the fresh air enters the chamber (10) at several points of the chamber periphery substantially tangentially.

4. Apparatus according to claim 1, characterised in that the mixing chamber (10) is provided with a connection (13) pointing laterally inclined upwardly for the section of the bypass line carrying the gas mixture of kiln waste gases and fresh air.

5. Apparatus, according to claim 1, characterised in that the mixing chamber (10) is provided with a closure member (14) vertically lowerable until engagement on the hopper (12).

FIG.1

*FIG.2*

*FIG.3*

*FIG.4*